# EUROPEAN PATENT SPECIFICATION

(11) **EP 1 548 456 B1**
(45) Date of publication and mention of the grant of the patent: **07.02.2007**
(21) Application number: 04106655.6
(22) Date of filing: 16.12.2004
(51) Int. Cl.: G01S 5/14

(54) **Location updating method and apparatus for a cellular subscriber unit comprising a communication receiver and a GPS receiver**
Verfahren und Gerät zum Location-Update eines zellularen Teilnehmerendgeräts, welches einen Kommunikationsempfänger und einen GPS-Empfänger aufweist
Procédé et appareil pour actualiser la position d'un terminal d'abonné dans un système radio cellulaire comprenant un récepteur de communication et un récepteur GPS

(30) Priority: 17.12.2003 GB 0329177
(43) Date of publication of application: 29.06.2005
(73) Proprietor: MOTOROLA, INC., Schaumburg, IL 60196 (US)
(72) Inventor: Shemesh, Yaron, 67899 Tel Aviv (IL); Bercovici, Michael, 67899 Tel Aviv (IL); Edry, Isaac, 67899 Tel Aviv (IL); Kahlon, Haim, 67899 Tel Aviv (IL)
(74) Representative: McCormack, Derek James

(56) References cited:
- US-A1- 2001 034 577
- US-A1- 2002 132 626
- US-A1- 2002 154 034
- US-B1- 6 298 229

## Description

### Field of the invention

The invention relates to a subscriber unit, a cellular communication system and a method of determining a location therefor and in particular to determining a location of a subscriber unit based on signals transmitted from satellites.

### Background of the Invention

In the latter decades, electronic means for determining a location have become increasingly widespread and popular. For example, car or boat navigational systems based on automatic electronic location determination are now prevalent.

The most widely used system for location determination is known as the Global Positioning System (GPS). GPS comprises typically 24 satellites orbiting the earth in low earth orbits. Each of the GPS satellites comprises an accurate time base and transmits radio signals together with timing information indicating the transmission time of the radio signals. A GPS unit may accordingly receive a signal from a GPS satellite and determine the propagation delay as the difference between the transmit time and the time the signal is received. Accordingly, the propagation delay may be used to determine a distance from the satellite to the GPS unit.

When a GPS unit receives signals from three GPS satellites, it can determine the distance between the current location and these three satellites. The GPS satellites furthermore transmit position information indicating the position of the individual GPS satellites (the terms position and location are used interchangeably in this application). As the GPS unit has information related to three fixed points in space and the distance between each of these points and the GPS unit, it may use simple geometric calculations to determine the position of the GPS unit.

The above description assumes that the GPS unit can accurately determine the reception time relative to the transmit time of the GPS satellites. Hence, although the GPS satellites are closely synchronised and have very accurate time bases, this further requires that the GPS unit has a very accurate time base in order to be sufficiently synchronised to the time base of the GPS satellites. An accurate time base is very complex and costly to implement and is unsuitable for e.g. cheap portable units. However, if the GPS unit receives signals from four different satellites, the additional information may be used to determine the unknown time variable thereby allowing an accurate three-dimensional position determination without requiring an accurate time base.

The accuracy that can be achieved by a GPS location determination based only on the signals transmitted from the GPS satellites is limited by the accuracy of the satellite position and timing information transmitted. This information is in particular provided by the satellite orbit details (the ephemeris) of the GPS navigation message, which is modulated onto the GPS signals. However, the accuracy of the location data can be enhanced by providing assistance data to the GPS unit. For example, in assisted GPS, a relatively local GPS correction transmitter may provide additional data that can be used to compensate for inaccuracies in the satellite transmitted ephemeris data. Thus, additional assistance data such as approximate location, time & date and satellite clock corrections may be transmitted to the GPS unit from a terrestrial source.

Currently, location determination for cellular communication systems is attracting significant interests. It is expected that location services will provide a significant revenue source in future cellular communication systems. In addition, location determination in cellular subscriber units is expected to assist in emergency situations and in some areas location functionality is becoming mandatory for cellular subscriber units.

Although location determination techniques based on the signals of the cellular communication system itself have been developed, these have a high degree of inaccuracy and cannot provide the location accuracy achievable by a GPS system. Typically, the accuracy of these systems ranges from a few hundred meters to several kilometres. Accordingly, many cellular subscriber units will incorporate a GPS unit for accurate location determination.

One problem associated with GPS units is that the ephemeris data received from the GPS satellites remains valid for only about three or four hours after its transmission. Therefore, the receiver must update its ephemeris information on that timescale. Furthermore, the accuracy of the ephemeris data and resulting location accuracy not only degrades with time but also depends on the movement of the GPS unit.

Also, the time taken to provide a valid location depends on the accuracy and validity of the stored ephemeris data in the GPS unit. Thus, if any aspects of the ephemeris data are inaccurate or invalid, a significant delay is introduced by the data having to be updated before a location can be determined.

The time it takes for a GPS unit to initialise from a dormant state and generate a first location estimate is known as the time to first fix. The time to first fix is very important in most GPS applications. For example, in an emergency situation, it is important that a GPS unit quickly can provide the location to the emergency services. However, if the ephemeris data must be updated first this could take several minutes, which is unacceptable.

The time to first fix depends on a number of parameters. Specifically, it depends on the validity of the stored information. For example, when a GPS unit is initialised, it needs to detect and lock on to the signals transmitted from the GPS satellites currently visible to the GPS unit. The duration of this depends on the current conditions and the location of the GPS unit. For example, if the GPS unit has valid information of which satellites of the GPS satellites are currently visible, it may set the search parameters for four of these satellites in order to quickly lock on to the signals therefrom. However, if the GPS unit does not have valid information that accurately allows it to determine which satellites are visible, it needs to search through the potential candidates, which increases the time to first fix substantially.

One solution to this problem is to heavily rely on assistance data which is frequently transmitted by a terrestrial station such as a base station of the cellular communication system. However, this approach requires additional elements capable of generating and transmitting the assistance data. Furthermore, the subscriber unit must comprise additional functionality capable of receiving and processing this information. Also, the frequent transmission of assistance data requires that this functionality is activated frequently which leads to a substantially increased power consumption in the dormant mode and thereby to a reduced battery life of the subscriber unit.

Another method to provide a fast time to first fix is to keep the GPS unit continuously active or to switch it on at relatively short time intervals. This will ensure that the stored information is always valid and accurate but will result in a high power consumption which is unacceptable for portable units where a long battery life is essential. It is thus not suitable for a GPS unit comprised in a cellular subscriber unit.

Some GPS units have been developed which support both the assisted mode wherein the assistance data is received from a terrestrial station and the autonomous mode where the GPS unit is active for the majority of the time. These systems typically use the GPS unit in autonomous mode to generate assisted data to be used by the same GPS unit upon an emergency demand or to simply shorten the time to first fix. In the autonomous mode, the GPS unit is switched on at regular time intervals to update the stored information. However, in order to ensure that the information is sufficiently accurate in all circumstances, the GPS unit must be switched on very frequently which results in increased power consumption. For example, a GPS unit may typically have to automatically update the stored information every 30 minutes.

Hence, an improved subscriber unit would be advantageous and in particular a subscriber unit having an improved location determining system allowing improved accuracy, reduced location determination time, reduced power consumption, increased battery life, and/or in particular having a reduced time to first fix would be advantageous.

### Summary of the Invention

Accordingly, the Invention seeks to preferably mitigate, alleviate or eliminate one or more of the above mentioned disadvantages singly or in any combination.

According to a first aspect of the invention there is provided a subscriber unit for a cellular communication system comprising: first location determining means operable to determine a first location estimate of the subscriber unit in response to signals transmitted from a plurality of satellites and satellite information related to the plurality of satellites; means for receiving the satellite information; second location determining means operable to determine a second location estimate based on information associated with the cellular communication system; and an update controller operable to determine an update time of the satellite information in response to the second location estimate.

The second location determining means may specifically be active when the first location determining means and or the means for receiving are powered down. Thus, when the first location determining means is powered down, location estimates are generated by the second location determining means and is used to control the update of satellite information thereby ensuring that the satellite information is kept valid and/or accurate while the first location determining means is powered down. In the application the term satellite is used to include the term space vehicle.

The first location determining means may specifically be more accurate location determining means than the second location determining means. The invention provides for an improved update operation of a subscriber unit comprising location determining means. The update of satellite information required for the first location determining means may be performed in response to a location estimate of the subscriber unit as determined by the second location means. Hence, the update operation may take into account the actual location of the subscriber unit without requiring that the first location determining means is active.

The invention allows updating of satellite information for satellite location determination to be based on location estimates determined which are based on transmissions in the cellular communication system. Specifically, the satellite information may be updated when the second location estimate indicates that the currently stored satellite information is invalid or inaccurate for the current subscriber unit location.

The second location determining means may accordingly provide an improved determination of when an update of the satellite information is required and therefore may allow a more optimised update operation wherein the means for receiving the satellite information is only switched on when required rather than at regular and frequent time intervals based on worst case assumptions.

Thus, the satellite information may be kept valid and accurate with fewer updates thereby providing reduced power consumption and increased battery life. Furthermore, the satellite information is ensured to be maintained valid and accurate thereby providing for a fast and accurate location determination of the first location determining means even when switching on from a dormant state. Thus, the time to first fix may be reduced.

In particular, the invention may for example provide emergency location information based on self-generated assistance data where the means for receiving will switch on at optimal time intervals to update the required assistance data. This enables or facilitates the subscriber unit in supporting emergency location estimates without requiring that assistance data is communicated from terrestrial means or from the fixed network of the cellular communication system, thereby obviating the need for complex and expensive modifications to the fixed network.

The satellite information may comprise any suitable information associated with the satellites and used by the first location determining means in determining a first location estimate. Preferably, the satellite information comprises ephemeris data associated with at least one of the plurality of satellites. The satellite information may for example include a position, orbit, time base, transmit frequency, identity, operating state etc of one or more of the satellites.

In accordance with a feature of the invention, the update controller is operable to activate the means for receiving the satellite information at the update time and to power down the means for receiving the satellite information following an update of the satellite information. This provides for reduced power consumption. Furthermore, as the means for receiving may be activated when required, the reduced power consumption may be achieved without resulting in reduced performance of the first location determining means or without degrading the time to first fix.

In accordance with another feature of the invention, the update controller is operable to activate the first location determining means at the update time and to power down the first location determining means following an update of the satellite information. This may provide for reduced power consumption and may be particularly suited for applications wherein the means for receiving and the first location determining means are combined or functionality of the first location determination means is used when updating the satellite information for example by processing the satellite information before storing this. The processing may for example include pre-processing of the satellite information in order to speed up location determination from the stored satellite information.

In accordance with another feature of the invention, the subscriber unit further comprises a location controller operable to activate the first location determining means in response to a location determination request. This provides for a practical implementation. For example, the first location determining means may be in a powered down state and only be activated when an accurate location is required. The location determination request may e.g. be generated in response to a user input, by a user application and/or by a control or emergency application running on the subscriber unit.

In accordance with another feature of the invention, the update controller is operable to determine a validity characteristic of the satellite information in response to the second location estimate and to determine the update time in response to the validity characteristic. The validity characteristic may indicate a suitability of the currently stored satellite information to be used in a location determination by the first location determining means. Specifically, the validity characteristic may be an indication of whether the currently stored satellite information is sufficiently accurate to provide a first location estimate of a given accuracy with a given probability. The required accuracy and probability may for example be directly estimated or may be implicitly considered.

In accordance with another feature of the invention, the update controller is operable to determine the update time as a time when the validity characteristic has a value corresponding to a reliability value of the satellite information. Preferably, the reliability value corresponds to a reliability of the satellite information sufficient for determining the first location estimate.

The update time is preferably given as the time when the validity or reliability of the currently stored satellite information crosses the threshold where it is considered that the probability of a first location estimate being determined with a given accuracy falls below a given threshold. The required accuracy and probability may for example be directly estimated or may be implicitly considered. For example, a criterion directly based on the second location estimate may be used. The update time may then be considered as the time when the criterion is met.

The reliability value is preferably set such than an update time is determined before the reliability of the currently stored satellite information falls below a value which is considered to result in an unacceptable performance. For example, if a first accuracy is required of the first location estimate with a first probability, the reliability value is preferably set to result in an update time which corresponds to a higher accuracy and a higher probability. Thus, the update time is preferably determined to provide a sufficient margin to ensure that a required location performance is always achieved.

In accordance with another feature of the invention, the update controller is operable to determine a location estimate change between a current location of the subscriber unit and a location of the subscriber unit at a previous update of the satellite information and to determine the validity characteristic in response to the location estimate change.

This provides a simple to implement yet efficient update performance.

Preferably, the update time depends on the location difference between the current location and the location where the currently stored satellite information was received. The suitability of the satellite information depends on the movement of the subscriber unit. Thus, the accuracy, probability and time delay associated with a first location estimate typically degrades as the subscriber unit moves from the location where the satellite information was received. Thus, typically, the validity, reliability or suitability of the satellite information for location determination decreases the further the subscriber unit moves without a new update of the satellite information. Accordingly, by ensuring that an update is performed when the subscriber unit has moved by a given amount, improved accuracy, reliability and/or time to first fix may be achieved. Furthermore, as fewer or no updates may be performed if the subscriber unit remains sufficiently static, the power consumption of the subscriber unit may be substantially reduced.

In accordance with another feature of the invention, the current location is determined by the second location determining means. The first location determining means and the means for receiving the satellite information may be powered down and only the second location determining means may be used to determine the location difference. The feature may provide reduced power consumption and increased battery life.

In accordance with another feature of the invention, the second location determining means is operable to determine the second location estimate by receiving a subscriber unit location estimate from a base station of the cellular communication system.

The determination of the second location estimate may be based on measurements performed in the network of the communication system. Specifically, the second location estimate may be determined in response to uplink transmissions between the subscriber unit and a plurality of base stations of the network. This may allow accurate location determination and/or provide for a simplified subscriber unit. The second location determining means may be at least partly formed by a cellular communication system receiver. The second location estimate may be the same as the subscriber unit location estimate or may for example be derived from this by further processing performed in the subscriber unit.

In accordance with another feature of the invention, the subscriber unit location estimate is received by a short data service.

The short data service may for example be a short message service. This provides for an efficient communication means which does not require modifications to the Technical Specifications of the cellular communication system. For example, the feature would allow an implementation in a Global System for Mobile communication (GSM) system without requiring any changes to the Technical Specifications of GSM.

In accordance with another feature of the invention, the second location determining means is operable to determine the second location estimate in response to radio signals transmitted to the subscriber unit from a plurality of base stations of the cellular communication system.

The second location estimate may be calculated in the subscriber unit based on signals received at the base station. Specifically, the subscriber unit may determine a position by triangulation between three or more base stations based on the propagation delays of signals transmitted from these. An advantage of this is that the second location estimate may be determined from signals which are continuously broadcast from base stations. Thus, no modifications are required to the base stations and no dedicated communication links are required. The approach is particularly suitable for subscriber units in idle mode as it does not require any transmissions from the subscriber unit.

In accordance with another feature of the invention, the update controller further comprises means for determining an elapsed time since a previous update of the satellite information; and wherein the update controller is further operable to determine the update time in response to the elapsed time. Preferably, the update time is determined as a time when the elapsed time exceeds a threshold.

The update time may additionally depend on the time that has elapsed since the previous update. Typically, the accuracy of the satellite information degrades with time. For example, GPS ephemeris data is typically suitable for use in a location determination for three to four hours. Updating the satellite information after a given duration, even if the subscriber unit has not moved, provides for increased reliability of the location determination process and ensures that the satellite information remains valid.

In accordance with another feature of the invention, the means for receiving the satellite information is operable to receive the satellite information from at least one of the plurality of base stations. This provides for an efficient system and obviates the need for a separate functionality for receiving the satellite information. Specifically, the means for receiving and the first location determining means may be combined. Furthermore, the approach is compatible with existing satellite positioning systems and in particular with the Global Positioning System (GPS).

In accordance with another feature of the invention, the subscriber unit comprises means for controlling the subscriber unit to operate in a first operating mode wherein the satellite information is received only from one or more of the plurality of satellites or to operate in a second operating mode wherein the satellite information is received only from at one or more of the plurality of base stations.

The subscriber unit may preferably operate in different modes depending on the current conditions. For example, if the subscriber unit is in a cellular communication system wherein the satellite information is transmitted by a base station, this information may be used. However, if no such transmission is present, the subscriber unit may retrieve the information from one or more of the satellites. Specifically, the means for receiving may comprise means for receiving the satellite information from a satellite and means for receiving the satellite information from a base station. The means for receiving the satellite information may be continuously active and the means for controlling may be operable to switch on the means for receiving the satellite information from a base station only if the means for receiving the satellite information from a base station does not detect any transmission of satellite information.

In accordance with another feature of the invention, the update controller comprises means for storing existing satellite information data during an update; and wherein the first location determining means is operable to determine the first location estimate in response to the existing satellite information data if a location determination coincides with the update.

This may provide a very fast time to first fix even during an update of the satellite information. For example, if an emergency situation arises, an accurate location may still be determined based on the stored satellite information. Thus, the existing satellite information is preferably retained until the updated satellite information has been fully received, processed and preferably stored. If the update controller is operable to instigate the update with a sufficient margin before the existing satellite information becomes invalid or inaccurate, it is ensured that suitable satellite information is always readily available for the first location determining means.

Preferably the first location determining means comprise a Global Positioning System receiver. Thus, preferably the first location determining means is compatible with GPS and is operable to determine the first location estimate from GPS satellites.

In accordance with a second aspect of the invention, there is provided a cellular communication system comprising: first location determining means operable to determine a first location estimate of the subscriber unit in response to signals transmitted from a plurality of satellites and satellite information related to the plurality of satellites; means for receiving the satellite information; second location determining means operable to determine a second location estimate of the subscriber unit in response to radio signals between the subscriber unit and a plurality of base station of the cellular communication system; and an update controller operable to determine an update time of the satellite information in response to the second location estimate.

In accordance with a third aspect of the invention, there is provided a method of determining a location in a subscriber unit for a cellular communication system comprising the steps of: determining a first location estimate based on information associated with the cellular communication system; determining an update time for updating satellite information related to a plurality of satellites in response to the first location estimate; receiving the satellite information at the update time; and determining a location estimate of the subscriber unit in response to signals transmitted from a plurality of satellites and the satellite information.

These and other aspects, features and advantages of the invention will be apparent from and elucidated with reference to the embodiment(s) described hereinafter.

### Brief Description of the Drawings

An embodiment of the invention will be described, by way of example only, with reference to the drawings, in which
FIG. 1 illustrates a cellular communication system comprising a subscriber unit in accordance with an embodiment of the invention; and
FIG. 2 illustrates a method of location determination in accordance with an embodiment of the invention.

### Detailed Description of a Preferred Embodiment of the Invention

The following description focuses on an embodiment of the invention applicable to a GSM (Global System for Mobile communication) subscriber unit comprising a GPS (Global Positioning System) location unit. However, it will be appreciated that the invention is not limited to this application but may be applied to many other cellular communication systems and satellite location systems including the upcoming satellite location system known as Galileo.

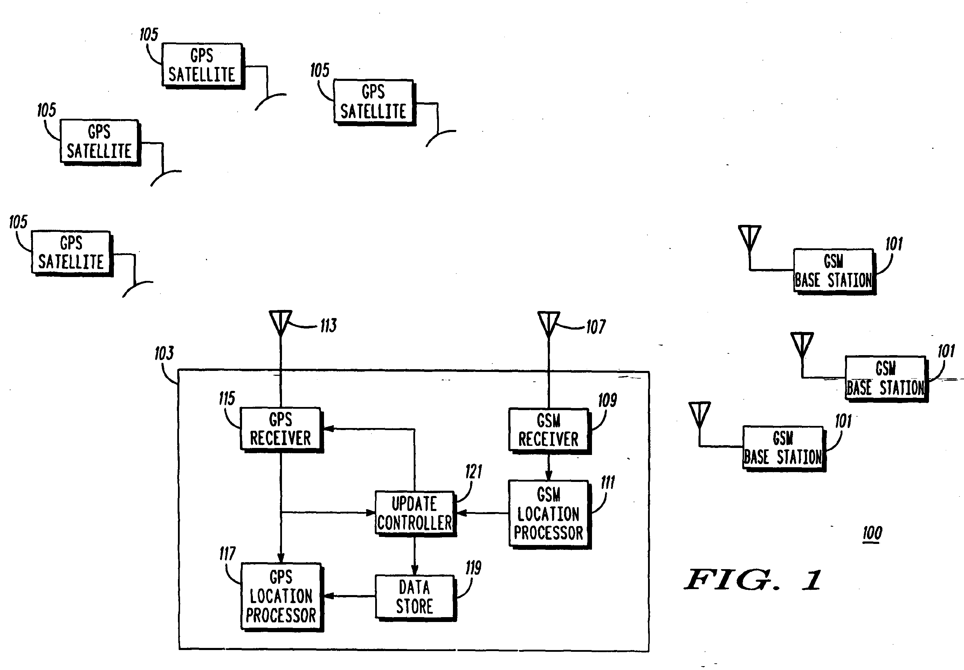

FIG. 1 illustrates a cellular communication system 100 comprising a subscriber unit 103 in accordance with an embodiment of the invention.

The cellular communication system 100 comprises a plurality of GSM base stations 101 interconnected by a fixed network (not shown). The base stations 101 are operable to communicate over the air interface with GSM subscriber units in accordance with the GSM Technical Specifications. In addition, the base stations 101 are operable to broadcast and transmit common information, such as the Broadcast Control CHannel (BCCH).

The fixed network is operable to interconnect the base stations 101, interface to external networks such as the Public Switched Telephone Network (PSTN) and provide much of the functionality required for managing a conventional cellular communication network as is well known in the art.

The cellular communication system comprises a subscriber unit 103 which is operable to communicate with the base stations 101 in accordance with the GSM Technical Specifications. In addition, the subscriber unit 103 is location enabled and is operable to automatically determine a location estimate for the subscriber unit 103.

The subscriber unit 103 may be a wireless user equipment, a mobile station, a communication terminal, a personal digital assistant, a laptop computer, an embedded communication processor or any communication element operable to communicate over the air interface of a cellular communication system.

For clarity and brevity, FIG. 1 illustrates only the functional modules of the subscriber unit 103 required for describing the current embodiment. In addition, the subscriber unit 103 comprises all the required or desired functionality for operating in accordance with the GSM and GPS Technical Specifications as will be well understood by the person skilled in the art.

FIG. 1 further illustrates four GPS satellites 105 of the GPS system for location determination. The subscriber unit 103 comprises functionality for determining a location of the subscriber unit 103 based the signals received from the GPS satellites 105.

The subscriber unit 103 comprises a GSM antenna 107 coupled to a GSM receiver 109 which is operable to receive signals from the GSM base stations 101. The GSM receiver 109 is operable to receive communication signals specifically transmitted from a base station 101 to the subscriber unit 103 and is furthermore operable to receive signals which are broadcast by the base stations 101.

The GSM receiver 109 is coupled to a GSM location processor 111 which is operable to generate a GSM location estimate based on information associated with the cellular communication system. In the specific embodiment, the GSM location processor 111 is operable to determine a GSM location estimate based on triangulation of signals transmitted from three or more base stations 101. Thus, the GSM location estimate is in the specific embodiment determined from information of the location of the base stations 101 together with timing measurements of the signals received from these.

The subscriber unit 103 additionally has a GPS antenna 113 coupled to a GPS receiver 115. The GPS receiver is operable to receive signals transmitted from the GPS satellites 105. The GPS receiver 115 is operable to receive signals from the GPS satellites 105 in order to determine the propagation delays and accordingly the position of the subscriber unit 103. In addition, the GPS receiver 115 comprises the required functionality for receiving information transmitted by the GPS satellites and in particular to demodulate the signals used for location determination in order to derive the information carried thereon. Thus, the GPS receiver 115 may specifically receive the navigation messages transmitted by the GPS satellites 105. The navigation messages comprise satellite information such as ephemeris data for the GPS satellites 105.

The GPS receiver 115 is coupled to a GPS location processor 117 which is operable to determine a GPS location estimate based on the signals transmitted from the GPS satellites 105. Since the GPS system, in contrast to the GSM system, has been designed and optimised for location determination, a much more accurate GPS location estimate than GSM location estimate is generally achievable. For example, GPS location estimates may typically have an accuracy of few tens of centimetres whereas GSM location estimates typically have an accuracy of several hundreds of meters.

The GPS location processor 117 is furthermore coupled to a data store 119 from where it may retrieve previously stored satellite information that may be used in the determination of the GPS location estimate. It will be appreciated that any suitable method or algorithm for determining a GPS location estimate may be used without detracting from the invention. Specifically, the GPS location processor 117 may determine the GPS location estimate in accordance with a conventional GPS location estimation algorithm known to the person skilled in the art.

The satellite information may be any suitable information that assists, facilitates, improves, enables or speeds up the determination of a location estimate based on the signals from the GPS satellites 105. Specifically, the satellite information may comprise ephemeris data related to the physical position or orbit of the satellites. In some embodiments, the satellite information may comprise assistance data including correction terms or compensation parameters that may be included in the location determination. It may be particularly advantageous for the satellite information to comprise information that enables or assists the subscriber unit in determining which satellites out of the total satellite constellation are currently visible to the subscriber unit. The satellite information preferably also comprises specific parameters which are required or desired in order to detect and lock on to the signals from these satellites. For example, the satellite information may comprise the transmit frequency and/or transmit code and/or identity of the individual satellites. In the described embodiment, the satellite information comprises the information transmitted by the GPS satellites 105 in the GPS navigation messages.

The GPS receiver 115 is also coupled to an update controller 121 which controls the storing and update of all or some of the satellite information used in determining the GPS location estimate. The update controller 121 is furthermore coupled to the data store 119 and is operable to store the received satellite information therein. Thus, when new satellite information is received by the GPS receiver 115 this is fed to the update controller 121 which consequently updates the satellite information stored in the data store 119.

The update controller 121 is furthermore coupled to the GPS receiver 115 so that it may control operational aspects of the GPS receiver 115. Specifically, the update controller 121 is operable to control the GPS receiver 115 to seek to receive new satellite information at a given update time.

In the described embodiment, the update controller 121 is furthermore operable to control the operational state of the GPS receiver 115 and is specifically operable to power down the GPS receiver 115 at times when no update of satellite information is required. The update controller 121 may additionally be operable to power down the GPS location processor 117 when no GPS location estimate is required. In some embodiments, the GPS receiver 115 and GPS location processor 117 may be implemented as a single functional unit. This functional unit may be powered down by the update controller 121 and only be activated when a GPS location estimate is required or when a satellite information update is required.

The update controller 121 furthermore comprises functionality for determining an update time for the satellite information in response to the GSM location estimate. Specifically, the update controller 121 may at suitable intervals receive the GSM location estimate from the GSM location processor 111 and in response to the received GSM location estimate determine whether an update of the satellite information is required or desired. If so, the update controller 121 powers on the GPS receiver 115 until updated satellite information has been received and stored in the data store. The update controller 121 then proceeds to power down the GPS receiver 115 in order to reduce the power consumption.

It will be appreciated that any suitable method for determining an update time of the satellite information in response to the GSM location estimate may be used.

In the described embodiment the update controller 121 stores the location estimate associated with the update of the satellite information. The stored location estimate may be based on the GSM location estimate or may be based on a GPS location estimate generated by the update controller 121 activating the GPS location processor 117 when updating the satellite information. Subsequent GSM location estimates are compared to the stored location estimates and if the distance between location estimates exceeds a predetermined threshold, the satellite information is updated.

Accordingly, the satellite information is only updated if the subscriber unit has moved sufficiently far from the location of the previous satellite information update. As satellite information used in location determination typically becomes less suitable at increasing distance from where the satellite information was received, it is ensured that the satellite information is updated when necessary. However, rather than updating the satellite information frequently based on a worst case assumption, the satellite information is only updated when necessary thereby resulting in significantly fewer updates and a reduced power consumption.

The suitability of the satellite information for location determination typically also degrades with time. For example, GPS ephemeris data received from GPS satellites is generally considered valid for three to four hours. Therefore, the update controller 121 may further instigate a satellite information update if more than, say, two and a half hours have elapsed since the previous satellite information update. Thus, even for a stationary subscriber unit, the satellite information will always be valid.

In the embodiment described above, the satellite information is always maintained valid and reliable despite the frequency and number of updates being significantly reduced. Accordingly, the subscriber unit 103 has always suitable satellite information available regardless of how long the GPS location processor 117 has been inactive. Accordingly, a very short time to first fix may be achieved. Specifically, a new GPS location estimate may typically be generated within 6 seconds of the location estimate being requested (although the exact time typically depends on the received satellites signal quality).

Preferably, the subscriber unit 103 is furthermore operable to directly provide the GSM location estimate to other applications and specifically to provide this to a user of the subscriber unit 103. The GSM location estimate may be provided in addition to or as an alternative to the GPS location estimate. For example, the subscriber unit 103 may provide a GPS location estimate if the GPS location processor 117 has the required data to generate this. However, if the GPS location estimate cannot be determined, for example because no signal can be received from the GPS satellites 105, the subscriber unit 103 may instead use the latest GSM location estimate if this is available. The location estimate may be accompanied by an indication of whether the estimate is a GPS location estimate or a GSM location estimate thereby allowing the application or user to take the relative accuracy into account.

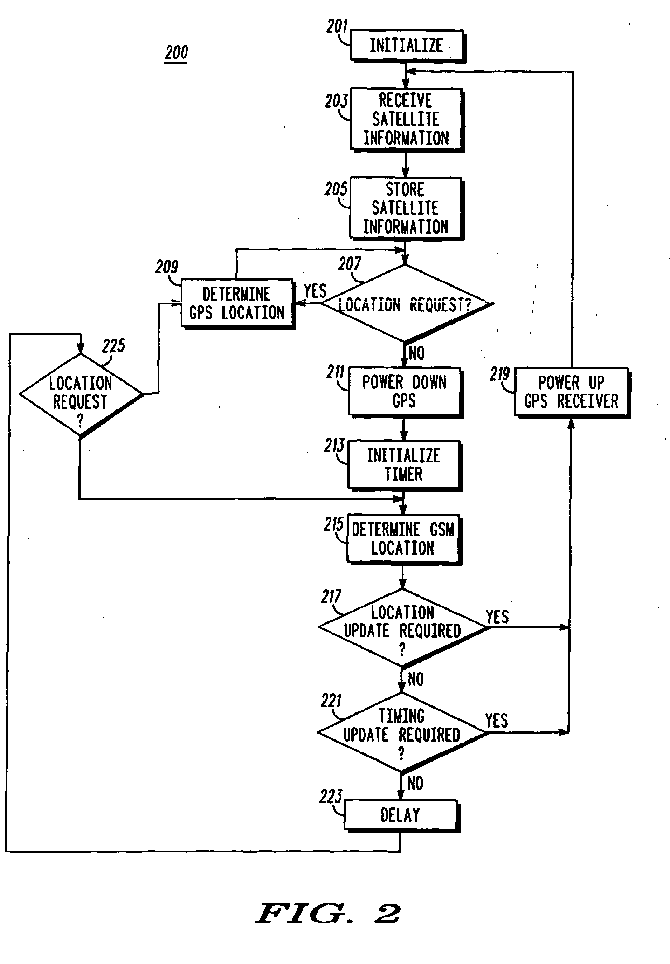

FIG. 2 illustrates a method of location determination in accordance with an embodiment of the invention. The method is applicable to the subscriber unit 103 of FIG. 1 and will be described with reference to this.

When the subscriber unit is switched on, the method 200 starts in step 201 where the functional modules of the subscriber unit are initialised.

Step 201 is followed by step 203 wherein the GPS receiver 115 receives the satellite information from the GPS satellites 105. The satellite information is fed to the update controller 121 which stores it in the data store. When the satellite information is received for the first time, the GPS receiver 115 operates without any prior knowledge and therefore initially searches for satellites before receiving the satellite information. Thus, the initial reception of satellite information may be of a significant duration. However, at subsequent updates, the previously stored satellite information is used to assist in the reception of the satellite information thereby significantly reducing the time required. Specifically, the stored satellite information may be used to select which GPS satellites are locked on to for receiving the satellite information.

In other embodiments, the satellite information may not necessarily be received from the GPS satellites 105 but may additionally or alternatively be received from other sources. Specifically, satellite information may be received via the cellular communication system by the base stations 101 transmitting satellite information.

Step 203 is followed by step 205 where the satellite information is stored in the data store 119.

Step 205 is followed by step 207 wherein the update controller 121 determines whether a GPS location estimate has been requested. The request may arise and be determined in any suitable way. For example, the subscriber unit 103 may comprise a user input whereby a user of the subscriber unit 103 can manually request a location update. Additionally or alternatively, the location request may be generated by a control, management or user application. In a simple embodiment, a location request is simply requested at periodic intervals determined by a simple timer.

If a GPS location estimate has been requested, the method continues in step 209 wherein a GPS location estimate is determined by the GPS location processor 117 using the stored satellite information and signals received from the GPS satellites 105. When the GPS location estimate has been generated, the method 200 returns to step 207 to determine if a further location request has been received. In some embodiments, step 209 may be followed by step 203.

If no location request is detected in step 207, the method 200 continues in step 211. In step 211, the update controller 121 powers down the GPS circuitry of the subscriber unit, and in the described embodiment specifically powers down the GPS receiver 115, the GPS location processor 117 and possibly the data store 119. In addition, the update controller 121 may power down aspects of the update controller 121 itself. For example, functionality associated with receiving the satellite information may be powered down except for when an update is performed. In some embodiments, the update controller 121 may be generally powered down and activated only when a new GSM location processor 111 is generated and fed to the update controller 121.

Step 211 is followed by step 213 wherein the update controller 121 initialises or resets an update timer. The timer value may be set at a suitable timing value which preferably corresponds to a time in which the stored satellite information is considered valid with a sufficient margin. For GPS ,the timing value may for example be set around two to two and a half hours as the satellite information is generally considered valid for three to four hours.

Step 213 is followed by step 215 wherein the GSM location processor 111 determines a GSM location estimate which is fed to the update controller 121. The GSM location estimate may be determined in any suitable way.

In some embodiments, the GSM location determination is subscriber unit based and is determined on the basis of downlink transmissions from base stations. Thus, any suitable subscriber unit based location algorithm may be used including the EOTD (Enhanced Observed Time Difference) and RSS (Received Signal Strength) methods well known in the art.

Alternatively or alternatively, the GSM location estimate may be determined on the basis of uplink transmissions from the subscriber unit 103. In this case, a location estimate may be determined in the fixed network (which includes the base stations). It will be appreciated that any suitable method of determining a location estimate may be used without detracting from the invention. For example, a fixed network based location determination may be determined by e.g. one or more of the TDOA (Time Difference of Arrival), TOA (Time of Arrival), RTT (Round Trip Time), AOA (Angle of Arrival) and RSS (Received Signal Strength) methods well known in the art.

The location estimate of the subscriber unit may preferably be communicated to the subscriber unit 103 by a short data service. In the specific embodiment, the location estimate may be communicated to the subscriber unit by use of the GSM Short Message Service (SMS) or Short Data Service (SDS) thereby providing efficient communication within the current GSM specifications.

It will be appreciated that the location estimate transmitted to the subscriber unit 103 may directly be the current location estimate for the subscriber unit or may be an indirect indication of this location. For example, the fixed network may directly calculate a difference between the current location and a location of the subscriber unit when the previous location update was performed. Thus, the location estimate may in some embodiments simply comprise an indication that the location has now changed by more than a given amount and that accordingly the subscriber unit 103 must perform an update of the satellite information.

The GSM location processor 111 may accordingly simply determine the GSM location estimate by extracting data from messages received from the base stations 101. In a very simple subscriber unit implementation, the GSM location estimate simply comprises an activation indication received from the base stations 101. When the activation indication is fed to the update controller 121, the update controller 121 instigates an update of the satellite information.

Step 215 is followed by step 217 wherein it is determined if the GSM location estimate indicates that an update of the satellite information is required or desired. It will be appreciated that any suitable algorithm or criterion for determining the need for an update in response to the GSM location estimate may be used.

In the specific embodiment, the GSM location estimate is used to determine if the satellite information currently stored is considered to be valid. It will be appreciated that any suitable criterion for deciding if the satellite information is valid may be used.

In the described embodiment, the satellite information is considered to be valid if the second location estimate indicates that the stored satellite information is applicable to the current location of the satellite information with a sufficiently high degree of probability. Thus, the validity characteristic preferably relates to the reliability of the stored satellite information. If this is considered sufficiently reliable for the GPS location processor 117 to generate a GPS location estimate without receiving any further satellite information, no update is instigated by the update controller 121.

Preferably, the update controller 121 does not explicitly calculate a probability of the stored satellite information being able to assist the GPS location processor 117 to provide a location determination within a given time or with a given accuracy. Rather, a predetermined criterion relating directly to the available parameters and specifically to the location estimates is generated.

For example, for GPS, the ephemeris data of the navigation messages are generally considered to be valid within a range of several kilometres from where it was received. Accordingly, the update controller 121 preferably uses a simple criterion based on the difference between the current location estimate and the location of the subscriber unit 103 at the last satellite information update. Thus, when a new GSM location estimate is received, the update controller 121 calculates the distance between this and a stored location estimate for the subscriber unit at the last update. If the distance is higher than a threshold of, say, two kilometres, the update controller 121 instigates a satellite information update. Otherwise, the update controller 121 simply ignores the GSM location estimate and does not take any action.

If the GSM location estimate indicates the need for an update of the satellite information, step 217 is followed by step 219 where the GPS receiver 115 is powered up. Step 219 is followed by step 203 where the GPS receiver 115 proceeds to receive satellite information in order to update the stored satellite information.

If the GSM location estimate does not indicate a need for an update of the satellite information, step 217 is followed by step 221. In step 221 the value of the update timer is determined. If the timer has run down, thereby indicating that the time elapsed since the last satellite information update has exceeded the set threshold, step 221 is followed by step 219 where the GPS receiver 115 is powered up. Step 219 is then again followed by step 203 where the GPS receiver 115 proceeds to receive satellite information in order to update the stored satellite information.

Thus, steps 217 and 219 determine whether an update of the satellite information is required either due to the location of the subscriber unit 103 having changed sufficiently or due to the duration since the last update exceeding a given value. Hence, the steps ensure that the space and time conditions are such that the stored satellite information is considered valid with a desired margin. If not, the method proceeds to update the satellite information.

If the update timer does not indicate that a satellite information update is required, the method proceeds to step 223 which simply comprises a delay. The delay may be set to any suitable length. For example, the delay may be set to a value that ensures only a short delay in detecting the need for a satellite information update yet reduces the power consumption associated with the determination of GSM location estimates.

Step 223 is followed by step 225 wherein it is determined whether a GPS location estimate has been requested. Step 225 is equivalent to step 207 and may for example be implemented by the same functionality, such as the same subroutine. If a GPS location estimate has been requested, the method proceeds to step 209 wherein a GPS location estimate is determined. Otherwise the method proceeds to step 215 wherein a new GSM location is determined.

It will be appreciated that in some embodiments, the detection of the location request is not part of the update loop. For example, a location request may be detected as an interrupt or through frequent polling independently of the update loop. This allows the dynamics of the location request detection to be independent of the update loop dynamics and specifically to not be affected by the delay of step 223.

In some embodiments, the subscriber unit may be operable to operate in different modes. Specifically, the subscriber unit may be operable to operate in a first mode wherein the satellite information is received from the GPS satellites as described above. However, in the other mode, the subscriber unit may be operable to receive the satellite information from the base stations of the cellular communication system. In this mode, the update controller 121 may be operable to power down the GPS functionality completely when no GPS location estimate is requested. This may result in reduced power consumption but still allow the satellite information to be kept up to date. However, if no satellite information is available from the base stations, the subscriber unit may switch to the first mode wherein operation may be as described with reference to FIG. 2 thereby ensuring that the satellite information is always valid.

It will be appreciated that the subscriber unit may switch between the two modes in accordance with any suitable algorithm or approach. For example, if satellite information is available from the base stations, the update controller 121 may still occasionally perform a satellite based update.

In some embodiments, the subscriber unit retains the existing satellite information during an update until the updated satellite information has been fully received, processed and stored. Specifically, the data store may comprise sufficient memory for storing two sets of satellite information. When an update is instigated, the stored satellite information is unaffected while the new satellite information is received and stored in a different section of the date store. When the update is complete and the full satellite information has been stored, the update controller 121 changes an indication from pointing to the first set to pointing to the new updated set of satellite information. The previous set is not deleted until this time (or it may simply be overwritten at the next update).

This will ensure that valid satellite information is always available to the GPS location processor. For example, if an emergency location request occurs during an update, the subscriber unit may simply abandon the update and generate a GPS location estimate based on the existing satellite information.

The invention can be implemented in any suitable form including hardware, software, firmware or any combination of these. However, preferably, the invention is implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Furthermore, although individually listed, a plurality of means, elements or method steps may be implemented by e.g. a single unit or processor.

## Claims

1. A subscriber unit for a cellular communication system comprising:
first location determining means operable to determine a first location estimate of the subscriber unit in response to signals transmitted from a plurality of satellites and satellite information related to the plurality of satellites;
means for receiving the satellite information;
second location determining means operable to determine a second location estimate based on information associated with the cellular communication system; and
an update controller operable to determine an update time of the satellite information in response to the second location estimate.

2. A subscriber unit as claimed in claim 1 wherein the update controller is operable to activate the means for receiving the satellite information at the update time and to power down the means for receiving the satellite information following an update of the satellite information.

3. A subscriber unit as claimed in any previous claim wherein the update controller is operable to activate the first location determining means at the update time and to power down the first location determining means following an update of the satellite information.

4. A subscriber unit as claimed in any previous claim wherein the subscriber unit further comprises a location controller operable to activate the first location determining means in response to a location determination request.

5. A subscriber unit as claimed in any previous claim wherein the update controller is operable to determine a validity characteristic of the satellite information in response to the second location estimate and to determine the update time in response to the validity characteristic.

6. A subscriber unit as claimed in claim 5 wherein the update controller is operable to determine the update time as a time when the validity characteristic has a value corresponding to a reliability value of the satellite information.

7. A subscriber unit as claimed in claim 6 wherein the reliability value corresponds to a reliability of the satellite information sufficient for determining the first location estimate.

8. A subscriber unit as claimed in any of the previous claims 5 to 7 wherein the update controller is operable to determine a location estimate change between a current location of the subscriber unit and a location of the subscriber unit at a previous update of the satellite information and to determine the validity characteristic in response to the location estimate change.

9. A subscriber unit as claimed in claim 8 wherein the current location is determined by the second location determining means.

10. A subscriber unit as claimed in any previous claim wherein the second location determining means is operable to determine the second location estimate by receiving a subscriber unit location estimate from a base station of the cellular communication system.

11. A subscriber unit as claimed in any previous claim wherein the subscriber unit location estimate is received by a short data service.

12. A subscriber unit as claimed in any previous claim wherein the second location determining means is operable to determine the second location estimate in response to radio signals transmitted to the subscriber unit from a plurality of base stations of the cellular communication system.

13. A subscriber unit as claimed in any previous claim wherein the update controller further comprises means for determining an elapsed time since a previous update of the satellite information; and wherein the update controller is further operable to determine the update time in response to the elapsed time.

14. A subscriber unit as claimed in claim 13 as above wherein the update time is determined as a time when the elapsed time exceeds a threshold.

15. A subscriber unit as claimed in any previous claim wherein the satellite information comprises ephemeris data associated with at least one of the plurality of satellites.

16. A subscriber unit as claimed in any previous claim wherein the means for receiving the satellite information is operable to receive the satellite information from at least one of the plurality of satellites.

17. A subscriber unit as claimed in any previous claim wherein the means for receiving the satellite information is operable to receive the satellite information from at least one of the plurality of base stations.

18. A subscriber unit as claimed in any previous claim wherein the subscriber unit comprises means for controlling the subscriber unit to operate in a first operating mode wherein the satellite information is received only from one or more of the plurality of satellites or to operate in a second operating mode wherein the satellite information is received only from one or more of the plurality of base stations.

19. A subscriber unit as claimed in any previous claim wherein the update controller comprises means for storing existing satellite information data during an update; and wherein the first location determining means is operable to determine the first location estimate in response to the existing satellite information data if a location determination coincides with the update.

20. A subscriber unit as claimed in any previous claim wherein the first location determining means comprise a Global Positioning System receiver.

21. A cellular communication system comprising:
first location determining means operable to determine a first location estimate of a subscriber unit in response to signals transmitted from a plurality of satellites and satellite information related to the plurality of satellites;
means for receiving the satellite information;
second location determining means operable to determine a second location estimate of the subscriber unit in response to radio signals between the subscriber unit and a plurality of base station of the cellular communication system; and
an update controller operable to determine an update time of the satellite information in response to the second location estimate.

22. A method of determining a location in a subscriber unit for a cellular communication system comprising the steps of:
determining a first location estimate based on information associated with the cellular communication system;
determining an update time for updating satellite information related to a plurality of satellites in response to the first location estimate;
receiving the satellite information at the update time; and
determining a location estimate of the subscriber unit in response to signals transmitted from a plurality of satellites and the satellite information.

23. A record carrier programmed to carry out the method according to claim 22.

## Patentansprüche

1. Teilnehmereinheit für ein zellulares Kommunikationssystem umfassend:
erste Standortbestimmungsmittel, die betreibbar sind, um eine erste Standortabschätzung der Teilnehmereinheit in Reaktion auf Signale, die von einer Mehrzahl von Satelliten übertragen werden, und Satelliteninformationen bezüglich der Mehrzahl von Satelliten zu bestimmen;
Mittel zum Empfangen der Satelliteninformationen;
zweite Standortbestimmungsmittel, die betreibbar sind, um eine zweite Standortabschätzung basierend auf Informationen zu bestimmen, die mit dem zellularen Kommunikationssystem verknüpft sind; und
eine Aktualisierungssteuerung, die betreibbar ist, um eine Aktualisierungszeit der Satelliteninformationen in Reaktion auf die zweite Standortabschätzung zu bestimmen.

2. Teilnehmereinheit gemäß Anspruch 1, wobei die Aktualisierungssteuerung betreibbar ist, um die Mittel zum Empfangen der Satelliteninformationen zu der Aktualisierungszeit zu aktivieren und die Mittel zum Empfangen der Satelliteninformationen nach einer Aktualisierung der Satelliteninformationen auszuschalten.

3. Teilnehmereinheit gemäß einem der vorherigen Ansprüche, wobei die Aktualisierungssteuerung betreibbar ist, um die ersten Standortbestimmungsmittel in der Aktualisierungszeit zu aktivieren und die ersten Standortbestimmungsmittel nach einer Aktualisierung der Satelliteninformationen auszuschalten.

4. Teilnehmereinheit gemäß einem der vorherigen Ansprüche, wobei die Teilnehmereinheit weiterhin eine Lokalisierungssteuerung umfasst, die betreibbar ist, um die ersten Standortbestimmungsmittel in Reaktion auf eine Standortbestimmungsanforderung zu aktivieren.

5. Teilnehmereinheit gemäß einem der vorherigen Ansprüche, wobei die Aktualisierungssteuerung betreibbar ist, um eine Gültigkeitscharakteristik der Satelliteninformationen in Reaktion auf die zweite Standortabschätzung zu bestimmen und die Aktualisierungszeit in Reaktion auf die Gültigkeitscharakteristik zu bestimmen.

6. Teilnehmereinheit gemäß Anspruch 5, wobei die Aktualisierungssteuerung betreibbar ist, um die Aktualisierungszeit als eine Zeit zu bestimmen, zu der die Gültigkeitscharakteristik einen Wert hat, der einem Verlässlichkeitswert der Satelliteninformationen entspricht.

7. Teilnehmereinheit gemäß Anspruch 6, wobei der Verlässlichkeitswert einer Verlässlichkeit der Satelliteninformationen entspricht, die ausreicht, um die erste Standortabschätzung zu bestimmen.

8. Teilnehmereinheit gemäß einem der vorherigen Ansprüche 5 bis 7, wobei die Aktualisierungssteuerung betreibbar ist, um eine Standortabschätzungsänderung zwischen einem aktuellen Standort der Teilnehmereinheit und einem Standort der Teilnehmereinheit bei einer vorherigen Aktualisierung der Satelliteninformationen zu bestimmen und die Gültigkeitscharakteristik in Reaktion auf die Standortabschätzungsänderung zu bestimmen.

9. Teilnehmereinheit gemäß Anspruch 8, wobei der aktuelle Standort durch die zweiten Standortbestimmungsmittel bestimmt wird.

10. Teilnehmereinheit gemäß einem der vorherigen Ansprüche, wobei die zweiten Standortbestimmungsmittel betreibbar sind, um die zweite Standortabschätzung durch Empfangen einer Teilnehmereinheitsstandortabschätzung von einer Basisstation des zellularen Kommunikationssystems zu bestimmen.

11. Teilnehmereinheit gemäß einem der vorherigen Ansprüche, wobei die Teilnehmereinheitsstandortabschätzung durch einen Kurzdatendienst ("short data service") empfangen wird.

12. Teilnehmereinheit gemäß einem der vorherigen Ansprüche, wobei die zweiten Standortbestimmungsmittel betreibbar sind, um die zweite Standortabschätzung in Reaktion auf Funksignale zu bestimmen, die an die Teilnehmereinheit von einer Mehrzahl von Basisstationen des zellularen Kommunikationssystems übertragen werden.

13. Teilnehmereinheit gemäß einem der vorherigen Ansprüche, wobei die Aktualisierungssteuerung weiterhin Mittel zum Bestimmen einer Zeit umfasst, die seit einer vorherigen Aktualisierung der Satelliteninformationen vergangen ist; und wobei die Aktualisierungssteuerung weiterhin betreibbar ist, um die Aktualisierungszeit in Reaktion auf die vergangene Zeit zu bestimmen.

14. Teilnehmereinheit gemäß Anspruch 13, wie oben dargelegt, wobei die Aktualisierungszeit als eine Zeit bestimmt wird, bei der die abgelaufene Zeit einen Schwellenwert überschreitet.

15. Teilnehmereinheit gemäß einem der vorherigen Ansprüche, wobei die Satelliteninformationen Ephemeridendaten umfassen, die mit mindestens einem der Mehrzahl von Satelliten verknüpft sind.

16. Teilnehmereinheit gemäß einem der vorherigen Ansprüche, wobei die Mittel zum Empfangen der Satelliteninformationen betreibbar sind, um die Satelliteninformationen von mindestens einem der Mehrzahl von Satelliten zu empfangen.

17. Teilnehmereinheit gemäß einem der vorherigen Ansprüche, wobei die Mittel zum Empfangen der Satelliteninformationen betreibbar sind, um die Satelliteninformationen von mindestens einer der Mehrzahl von Basisstationen zu empfangen.

18. Teilnehmereinheit gemäß einem der vorherigen Ansprüche, wobei die Teilnehmereinheit Mittel zum Steuern der Teilnehmereinheit umfasst, um in einer ersten Betriebsart zu arbeiten, wobei die Satelliteninformationen nur von einem oder mehreren der Mehrzahl von Satelliten empfangen werden, oder in einer zweiten Betriebsart zu arbeiten, wobei die Satelliteninformationen nur von einer oder mehreren der Mehrzahl von Basisstationen empfangen werden.

19. Teilnehmereinheit gemäß einem der vorherigen Ansprüche, wobei die Aktualisierungssteuerung Mittel zum Speichern von vorhandenen Satelliteninformationsdaten während einer Aktualisierung umfasst; und wobei die ersten Standortbestimmungsmittel betreibbar sind, um die erste Standortabschätzung in Reaktion auf die vorhandenen Satelliteninformationsdaten zu bestimmen, wenn eine Standortbestimmung mit der Aktualisierung zusammenfällt.

20. Teilnehmereinheit gemäß einem der vorherigen Ansprüche, wobei das erste Standortbestimmungsmittel einen GPS-Empfänger umfasst.

21. Zellulares Kommunikationssystem umfassend:
erste Standortbestimmungsmittel, die betreibbar sind, um eine erste Standortabschätzung der Teilnehmereinheit in Reaktion auf Signale, die von einer Mehrzahl von Satelliten übertragen werden, und Satelliteninformationen bezüglich der Mehrzahl von Satelliten zu bestimmen;
Mittel zum Empfangen der Satelliteninformationen;
zweite Standortbestimmungsmittel, die betreibbar sind, um eine zweite Standortabschätzung der Teilnehmereinheit in Reaktion auf Funksignale zwischen der Teilnehmereinheit und einer Mehrzahl von Basisstationen des zellularen Kommunikationssystems zu bestimmen, und
eine Aktualisierungssteuerung, die betreibbar ist, um eine Aktualisierungszeit der Satelliteninformationen in Reaktion auf die zweite Standortabschätzung zu bestimmen.

22. Verfahren zum Bestimmen eines Standortes einer Teilnehmereinheit für ein zellulares Kommunikationssystem, die folgenden Schritte umfassend:
Bestimmen einer ersten Standortabschätzung basierend auf Informationen, die mit dem zellularen Kommunikationssystem verknüpft sind;
Bestimmen einer Aktualisierungszeit für eine Aktualisierung von Satelliteninformationen bezüglich einer Mehrzahl von Satelliten in Reaktion auf die erste Standortabschätzung;
Empfangen der Satelliteninformationen zu der Aktualisierungszeit; und
Bestimmen einer Standortabschätzung der Teilnehmereinheit in Reaktion auf Signale, die von einer Mehrzahl von Satelliten übertragen werden, und die Satelliteninformationen.

23. Datenträger, der programmiert ist, um das Verfahren gemäß Anspruch 22 auszuführen.

## Revendications

1. Unité d'abonné pour un système de communication cellulaire comprenant :
un premier moyen de détermination de l'emplacement pouvant être mis en oeuvre pour déterminer une première estimation d'emplacement de l'unité d'abonné en réponse à des signaux émis depuis une pluralité de satellites et à des informations de satellites associées à la pluralité de satellites,
un moyen destiné à recevoir les informations des satellites,
un second moyen de détermination d'emplacement pouvant être mis en oeuvre pour déterminer une seconde estimation d'emplacement sur la base d'informations associées au système de communication cellulaire, et
un contrôleur de mise à jour pouvant être mis en oeuvre pour déterminer un instant de mise à jour des informations de satellites en réponse à la seconde estimation d'emplacement.

2. Unité d'abonné selon la revendication 1, dans laquelle le contrôleur de mise à jour peut être mis en oeuvre pour activer le moyen destiné à recevoir les informations de satellites à l'instant de mise à jour et pour mettre hors tension le moyen de réception des informations de satellites après une mise à jour des informations de satellites.

3. Unité d'abonné selon l'une quelconque des revendications précédentes, dans laquelle le contrôleur de mise à jour peut être mis en oeuvre pour activer le premier moyen de détermination d'emplacement à l'instant de mise à jour et pour mettre hors tension le premier moyen de détermination d'emplacement après une mise à jour des informations de satellites.

4. Unité d'abonné selon l'une quelconque des revendications précédentes, dans laquelle l'unité d'abonné comprend en outre un contrôleur d'emplacement pouvant être mis en oeuvre pour activer le premier moyen de détermination d'emplacement en réponse à une demande de détermination d'emplacement.

5. Unité d'abonné selon l'une quelconque des revendications précédentes, dans laquelle le contrôleur de mise à jour peut être mis en oeuvre pour déterminer une caractéristique de validité des informations de satellites en réponse à la seconde estimation d'emplacement et pour déterminer l'instant de mise à jour en réponse à la caractéristique de validité.

6. Unité d'abonné selon la revendication 5, dans laquelle le contrôleur de mise à jour peut être mis en oeuvre pour déterminer l'instant de mise à jour comme étant un instant où la caractéristique de validé a une valeur correspondant à une valeur de fiabilité des informations de satellites.

7. Unité d'abonné selon la revendication 6, dans laquelle la valeur de fiabilité correspond à une fiabilité des informations de satellites suffisante pour déterminer la première estimation d'emplacement.

8. Unité d'abonné selon l'une quelconque des revendications précédentes 5 à 7, dans laquelle le contrôleur de mise à jour peut être mis en oeuvre pour déterminer une modification d'estimation d'emplacement entre un emplacement actuel de l'unité d'abonné et un emplacement de l'unité d'abonné à une mise à jour précédente des informations de satellites et pour déterminer la caractéristique de validité en réponse au changement d'estimation d'emplacement.

9. Unité d'abonné selon la revendication 8, dans laquelle l'emplacement actuel est déterminé par le second moyen de détermination d'emplacement.

10. Unité d'abonné selon l'une quelconque des revendications précédentes, dans laquelle le second moyen de détermination d'emplacement peut être mis en oeuvre pour déterminer la seconde estimation d'emplacement en recevant une estimation d'emplacement d'unité d'abonné depuis une station de base du système de communication cellulaire.

11. Unité d'abonné selon l'une quelconque des revendications précédentes, dans laquelle l'estimation d'emplacement d'unité d'abonné est reçue par le biais d'un service de données court.

12. Unité d'abonné selon l'une quelconque des revendications précédentes, dans laquelle second moyen de détermination d'emplacement peut être mis en oeuvre pour déterminer la seconde estimation d'emplacement en réponse à des signaux radio transmis à l'unité d'abonné depuis une pluralité de stations de base du système de communication cellulaire.

13. Unité d'abonné selon l'une quelconque des revendications précédentes, dans laquelle le contrôleur de mise à jour comprend en outre un moyen destiné à déterminer un temps écoulé depuis une mise à jour précédente des informations de satellites, et dans laquelle le contrôleur de mise à jour peut en outre être mis en oeuvre pour déterminer l'instant de mise à jour en réponse au temps écoulé.

14. Unité d'abonné selon la revendication 13, telle que ci-dessus, dans laquelle l'instant de mise jour est déterminé comme étant un instant où le temps écoulé dépasse un certain seuil.

15. Unité d'abonné selon l'une quelconque des revendications précédentes, dans laquelle les informations de satellites comprennent des données d'éphéméride associées à au moins l'un de la pluralité de satellites.

16. Unité d'abonné selon l'une quelconque des revendications précédentes, dans laquelle le moyen de réception des informations de satellites peut être mis en oeuvre pour recevoir les informations de satellites depuis au moins l'un de la pluralité de satellites.

17. Unité d'abonné selon l'une quelconque des revendications précédentes, dans laquelle le moyen de réception des informations de satellites peut être mis en oeuvre pour recevoir les informations de satellites depuis au moins l'une de la pluralité de stations de base.

18. Unité d'abonné selon l'une quelconque des revendications précédentes, dans laquelle l'unité d'abonné comprend un moyen destiné à commander l'unité d'abonné afin qu'elle fonctionne dans un premier mode de fonctionnement, dans lequel les informations de satellites ne sont reçues que d'un ou plusieurs satellites de la pluralité de satellites ou pour fonctionner dans un second mode de fonctionnement, dans lequel les informations de satellites ne sont reçues que d'une ou plusieurs stations de la pluralité de stations de base.

19. Unité d'abonné selon l'une quelconque des revendications précédentes, dans laquelle le contrôleur de mise à jour comprend un moyen destiné à mémoriser des données d'informations de satellites existantes au cours d'une mise à jour, et dans laquelle le premier moyen de détermination d'emplacement peut être mis en oeuvre pour déterminer la première estimation d'emplacement en réponse aux données d'informations de satellites existantes si une détermination d'emplacement coïncide avec la mise à jour.

20. Unité d'abonné selon l'une quelconque des revendications précédentes, dans laquelle le premier moyen de détermination d'emplacement comprend un récepteur de système de positionnement mondial.

21. Système de communication cellulaire comprenant :
un premier moyen de détermination d'emplacement pouvant être mis en oeuvre pour déterminer une première estimation d'emplacement d'une unité d'abonné en réponse à des signaux transmis depuis une pluralité de satellites et à des informations de satellites associées à la pluralité de satellites,
un moyen destiné à recevoir les informations de satellites,
un second moyen de détermination d'emplacement pouvant être mis en oeuvre pour déterminer une seconde estimation d'emplacement de l'unité d'abonné en réponse à des signaux radio entre l'unité d'abonné et une pluralité de stations de base du système de communication cellulaire, et
un contrôleur de mise à jour pouvant être mis en oeuvre pour déterminer un instant de mise à jour des informations de satellites en réponse à la seconde estimation d'emplacement.

22. Procédé de détermination d'un emplacement dans une unité d'abonné pour un système de communication cellulaire comprenant les étapes consistant à :
déterminer une première estimation d'emplacement sur la base d'informations associées au système de communication cellulaire,
déterminer un instant de mise à jour pour mettre à jour des informations de satellites associées à une pluralité de satellites en réponse à la première estimation d'emplacement,
recevoir les informations de satellites à l'instant de mise à jour, et
déterminer une estimation d'emplacement de l'unité d'abonné en réponse à des signaux transmis depuis une pluralité de satellites et aux informations de satellites.

23. Support d'enregistrement programmé pour exécuter le procédé selon la revendication 22.
